# EUROPÄISCHE PATENTSCHRIFT

(11) **EP 1 963 165 B1**
(45) Veröffentlichungstag und Bekanntmachung des Hinweises auf die Patenterteilung: **16.09.2015**
(21) Anmeldenummer: 06818749.1
(22) Anmeldetag: 23.11.2006
(51) Int. Cl.: B62D 25/07, B60R 9/058

(54) **DACH FÜR EIN KRAFTFAHRZEUG**
ROOF FOR A MOTOR VEHICLE
TOIT POUR UN VÉHICULE AUTOMOBILE

(30) Priorität: 13.12.2005 DE 102005059258
(43) Veröffentlichungstag der Anmeldung: 03.09.2008
(73) Patentinhaber: GM Global Technology Operations LLC, Detroit, MI 48265-3000 (US)
(72) Erfinder: FUCHS, Michael, 55232 Alzey-Weinheim (DE); LOITZ, Joachim-Günther, 55232 Alzey (DE); ROGGE, Andreas, 67585 Dorn-Dürkheim (DE)
(74) Vertreter: Strauss, Peter
(86) Internationale Anmeldenummer: PCT/EP2006/011221
(87) Internationale Veröffentlichungsnummer: WO 2007/068333

(56) Entgegenhaltungen:
- EP-A- 0 827 869
- DE-A1- 19 840 295
- DE-U1- 29 514 216
- JP-A- 6 344 833

## Beschreibung

Die Erfindung betrifft ein Dach für ein Kraftfahrzeug mit einem Dachkanal, mit einer den Dachkanal abdeckenden Abdeckleiste, mit einer wahlweise verschließbaren oder freigebbaren Dachlastträgeröffnung und mit im Bereich der Dachlastträgeröffnung angeordneten Haltemitteln zur Halterung eines Dachlastträgers und den weiteren Merkmalen des Oberbegriffs des Anspruches 1.

Ein solches Dach wird bei heutigen Kraftfahrzeugen häufig eingesetzt und ist aus der Praxis bekannt. Die Dachlastträgeröffnung ermöglicht die Montage eines Dachlastträgers, beispielsweise an einem in dem Dachkanal angeordneten Haltebock. Im Bereich der Dachlastträgeröffnung hat die Abdeckleiste eine Ausnehmung. Bei nicht montiertem Dachlastträger wird die Dachlastträgeröffnung verschlossen. Das Verschließen der Dachlastträgeröffnung erfolgt bei aus der Praxis bekannten Kraftfahrzeugen beispielsweise von einem in die Ausnehmung der Abdeckleiste eingesetzten losen Deckel. Ein solcher Deckel kann jedoch verloren gehen und ist aufwändig zu montieren und zu demontieren. Weiterhin sind aus der Praxis in der Abdeckleiste verschiebbare und klappbare Deckel bekannt geworden. Diese verschiebbaren und klappbaren Deckel müssen jedoch sehr aufwändig geführt oder gelagert werden. Die klappbaren Deckel benötigen zudem sehr großen Bauraum.

Die gattungsbildende DE 198 40 295 A1 beschreibt eine Abdeckleiste mit einer Dachlastträgeöffnung. In dieser Öffnung befindet sich ein Schieber, der gegen eine Vielzahl von Federelementen zum Öffnen der Dachlastträgeröffnung zunächst gleichmäßig über seine gesamte Länge nach unten gedrückt und dann seitlich in einen Führungskanal unterhalb der Abdeckleiste geschoben wird.
In der EP 0 827 869 A wird eine Abdeckleiste für einen Dachkanal beschrieben. Ein Schieber, der sich in der Dachlastöffnung befindet, wird an einem Ende von einem metallischen Federbügel, der mit dem Schieber verbunden ist, abgestützt. Zum Freigeben der Öffnung wird der Schieber am Federende nach unten gedrückt, so dass sich das gegenüberliegende Ende nach oben über die Abdeckleiste erhebt. Sodann kann der Schieber schräg unter die Abdeckleiste geführt werden.
Die DE 295 14 216 U1 beschreibt ebenfalls eine Abdeckleiste mit einer Öffnung, in der sich ein Schieber befindet. Dieser wird an beiden Enden von Drahtbügelelementen in die Dachlastträgeröffnung gedrückt. Zum Freigeben der Dachlastträgeröffnung wird der Schieber an beiden Enden belastet und nach unten gedrückt und sodann parallel seitlich unter die Abdeckleiste geschoben.
Die JP 6 344833 beschreibt einen Schieber, der in einer parallel zur Dachträgerleiste angeordneten Bahn verschoben wird, um die Dachlastträgeröffnung freizugeben.

Der Erfindung liegt das Problem zugrunde, ein Dach der eingangs genannten Art so weiterzubilden, dass es besonders kostengünstig herstellbar ist und ein komfortables Freigeben und Schließen der Dachlastträgeröffnung ermöglicht.

Dieses Problem wird erfindungsgemäß mit einem Dach gelöst, das die Merkmale des Anspruches 1 aufweist.
Demnach sind in der Dachlastträgeröffnung ein Käfig und ein Schieber angeordnet, wobei der Käfig im Bereich der Haltemittel für den Dachlastträger angeordnet ist und der Schieber in dem Käfig längsverschieblich von einer die Dachlastträgeröffnung verschließenden Stellung in eine die Dachlastträgeröffnung freigebenden Stellung geführt ist. Weitere erfindungsgemäße Ausgestaltungen des Käfigs und des Schiebers ergeben sich aus dem Folgenden.
Durch diese Gestaltung ist der Schieber in dem Käfig geführt und kann nicht verloren gehen. Hierdurch gestaltet sich das Freigeben und Schließen der Dachlastträgeröffnung besonders komfortabel. Zudem erfordert das Dach eine besonders geringe Anzahl an Bauteilen und lässt sich daher kostengünstig fertigen. Da die Abdeckleiste keine Führungs- oder Lagerfunktion für den Schieber benötigt, kann sie kostengünstig aus Flachmaterial gefertigt sein. Vorzugsweise umrahmt der Käfig die Haltemittel für den Dachlastträger.

Das erfindungsgemäße Dach lässt sich besonders kostengünstig montieren, wenn der Käfig und der Schieber eine vormontierbare bauliche Einheit bilden.

Ein bündiger Anschluss der Abdeckleiste an dem Käfig lässt sich gemäß einer anderen vorteilhaften Weiterbildung der Erfindung einfach erzeugen, wenn die Abdeckleiste eine die Dachlastträgeröffnung aufweisende Ausnehmung hat und wenn ein an die Ausnehmung angrenzender Rand der Abdeckleiste auf dem Käfig aufliegt. Hierdurch werden Verwirbelungen des Fahrtwindes im Bereich der Befestigungsausnehmung vermieden. Weiterhin ist der bündige Anschluss der Abdeckleiste optisch ansprechend.

Der Schieber wird gemäß der Erfindung in der die Dachlastträgeröffnung verschießenden Stellung zuverlässig in seiner Lage gehalten, wenn der Käfig eine Öffnung hat und der Schieber eine passend in die Öffnung eindringende Erhebung hat. Weiterhin ermöglicht diese Gestaltung eine bündig abschließende Oberfläche zwischen Käfig und Schieber in der geschlossenen Stellung und eine Verrasterung des Schiebers in dem Käfig.

Der bauliche Aufwand für die zuverlässige Halterung des Schiebers in der Öffnung des Käfigs lässt sich gemäß einer anderen vorteilhaften Weiterbildung der Erfindung besonders gering halten, wenn der Schieber eine um die Erhebung umlaufende Anlagekante hat.

Eine zuverlässige Halterung des Schiebers in der die Dachlastträgeröffnung verschließenden Stellung lässt sich gemäß der Erfindung einfach sicherstellen, wenn der Käfig ein den Schieber in die Öffnung vorspannendes Federelement hat.

Die vormontierbare bauliche Einheit aus Schieber und Käfig gestaltet sich gemäß der Erfindung konstruktiv besonders einfach, wenn der Käfig eine Führung für den Schieber aufweist.

Der bauliche Aufwand für die Führung für den Schieber lässt sich gemäß einer anderen vorteilhaften Weiterbildung der Erfindung besonders gering halten, wenn die Führung des Käfigs in Verschiebungsrichtung gesehen jeweils einen seitlichen Rand des Schiebers umgreifende Führungsbahnen hat.

Bei der Bewegung in die die Dachlastträgeröffnung freigebende Stellung lässt sich der Schieber gemäß der Erfindung unter die Abdeckleiste führen, wenn sich an die Führungsbahnen ein Führungskanal fluchtend anschließt und wenn der Führungskanal näher am Boden des Dachkanals angeordnet ist als die Führungsbahnen.

Zur weiteren Vereinfachung der Handhabung des Schiebers trägt es gemäß der Erfindung bei, wenn der Käfig und der Schieber miteinander korrespondierende Rastmittel zur Halterung des Schiebers in der die Dachlastträgeröffnung verschließenden Stellung und/oder in der die Dachlastträgeröffnung freigebenden Stellung des Schiebers aufweisen.

Die Halterung des Schiebers in der vorgesehenen Stellung gegenüber dem Käfig gestaltet sich gemäß der Erfindung besonders einfach, wenn der Schieber an einem Ende eine hervorstehende Nase hat und wenn das Federelement des Käfigs gegen die Nase vorgespannt ist. Vorzugsweise ist die Nase an einem Ende des Schiebers angeordnet.

Der Bewegungsbereich des Schiebers lässt sich gemäß der Erfindung einfach begrenzen, wenn der Schieber einen Anschlaghaken hat und wenn der Anschlaghaken in der die Dachlastträgeröffnung freigebenden Stellung an dem Käfig anliegt. Hierdurch lässt sich einfach sicherstellen, dass der Schieber auch bei der in der Dachlastträgeröffnung freigebenden Stellung gegriffen werden kann, um ihn wieder in die die Dachlastträgeröffnung verschließende Stellung zu bewegen.

Eine aufwändige Anordnung von Federelementen oder dergleichen an dem Schieber lässt sich gemäß der Erfindung einfach vermeiden, wenn der Schieber elastisch gestaltet ist. Diese Gestaltung ermöglicht es, dass der Schieber durch seine Elastizität in die Öffnung des Käfigs vorgespannt und damit zuverlässig gehalten ist. Durch Druck auf den Schieber lässt sich der Schieber verformen und mit einem Ende aus der Öffnung des Käfigs herausdrücken und in den Führungskanal schieben.

Zur weiteren Verringerung der Herstellungskosten des erfindungsgemäßen Daches trägt es bei, wenn der Schieber und der Käfig aus Kunststoff gefertigt sind. Weiterhin lässt sich hierdurch der Schieber einfach biegen, um ihn bei der Bewegung in die die Dachlastträgeröffnung freigebenden Stellung in den Führungskanal des Käfigs zu drücken.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: perspektivisch ein Dach eines Kraftfahrzeuges mit einem erfindungsgemäßen Dach,
- Fig. 2: stark vergrößert eine Schnittdarstellung durch das erfindungsgemäße Dach aus Figur 1 entlang der Linie II-II,
- Fig. 3: eine Schnittdarstellung durch das erfindungsgemäße Dach aus Figur 2 entlang der Linie III - III in einer verschlossenen Stellung einer Dachlastträgeröffnung,
- Fig. 4: das erfindungsgemäße Dach aus Figur 3 beim Öffnen der Dachlastträgeröffnung,
- Fig. 5: das erfindungsgemäße Dach aus Figur 3 in freigegebener Stellung der Dachlastträgeröffnung,

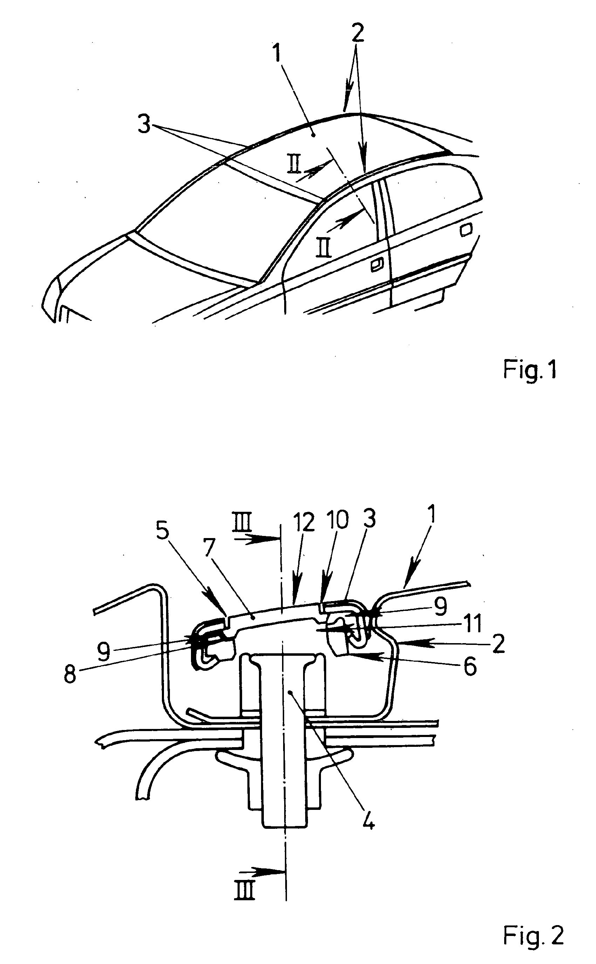

Figur 1 zeigt ein Kraftfahrzeug mit einem Dach 1 und seitlich längs des Daches 1 angeordneten Dachkanälen 2. Die Dachkanäle 2 sind jeweils von einer Abdeckleiste 3 verschlossen.

Figur 2 zeigt eine stark vergrößerte Schnittdarstellung durch das Dach 1 aus Figur 1 in einer Schnittdarstellung entlang der Linie II - II im Bereich eines von mehreren Haltemitteln 4 für einen nicht dargestellten Dachlastträger. Das Haltemittel 4 ist im Boden des Dachkanals 2 unterhalb einer Dachlastträgeröffnung 5 der Abdeckleiste 3 befestigt. Im Bereich des Haltemittels 4 ist in dem Dachkanal 2 ein Käfig 6 befestigt, in welchem ein Schieber 7 senkrecht zur Zeichenebene und damit längs des Dachkanals 2 verschieblich geführt ist. Der Käfig 6 hat hierfür eine Führung 8 für den Schieber 7. Seitliche Führungsbahnen 9 der Führung 8 des Käfigs 6 stützen einen äußeren Rand des Schiebers 7 ab. Die Abdeckleiste 3 hat im Bereich der Dachlastträgeröffnung 5 eine Ausnehmung 10 und liegt mit einem Rand auf dem Käfig 6 auf. Der Käfig 6 weist eine zur Einführung des Dachlastträgers zu dem Haltemittel 4 vorgesehene Öffnung 11 auf, welche in der dargestellten Stellung von dem Schieber 7 verschlossen ist. Der Schieber 7 hat in seinem zentrischen Bereich eine bündig mit der Abdeckleiste 3 abschließende Erhebung 12.

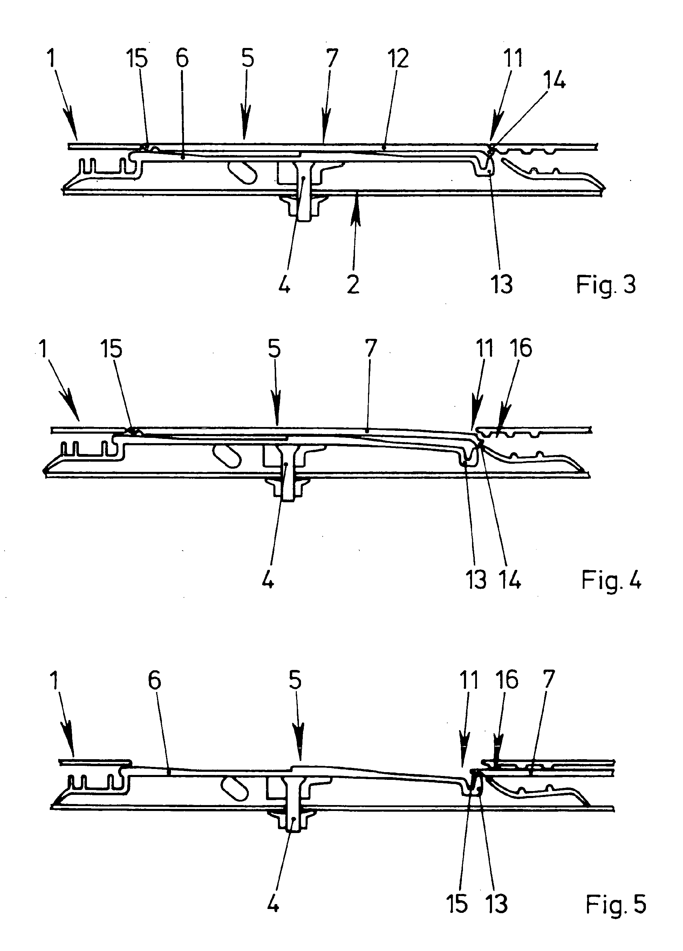

Figur 3 zeigt das Dach in einer Schnittdarstellung durch das Dach 1 aus Figur 2 entlang der Linie III-III in der die Dachlastträgeröffnung 5 verschließenden Stellung des Schiebers 7. Hierbei ist zu erkennen, dass der Schieber 7 von einem Federelement 13 des Käfigs 6 in die Öffnung 11 vorgespannt ist. Der Käfig 6 stützt sich an dem Boden des Dachkanals 2 ab. An einem Ende hat der Schieber 7 eine hervorstehende Nase 14, welche von dem Federelement 13 vorgespannt wird. Hierdurch wird die Erhebung 12 des Schiebers 7 in die Öffnung 11 des Käfigs 6 hineingedrückt und der Schieber 7 in der dargestellten Stellung verrastet. An dem gegenüberliegenden Ende weist der Schieber 7 einen Anschlaghaken 15 auf. Schieber 7 und Käfig 6 sind aus Kunststoff gefertigt und elastisch gestaltet.

Zum Freigeben der Dachlastträgeröffnung 5 lässt sich der Schieber 7 an einem Ende gegen die Kraft des Federelementes 13 des Käfigs 6 niederdrücken, wie es in Figur 4 dargestellt ist. Anschließend kann der Schieber 7 in seine Längsrichtung in einen Führungskanal 16 des Käfigs 6 hineingeschoben werden, wie es in Figur 5 dargestellt ist. Hierbei wird der Schieber 7 von dem Anschlaghaken 15 an dem Käfig 6 gehalten. In Figur 5 ist das Dach 1 in der die Dachlastträgeröffnung 5 freigebenden Stellung des Schiebers 7 dargestellt. Die Haltemittel 4 für den Dachlastträger sind damit frei zugänglich.

### Bezugszeichenliste

- 1: Dach
- 2: Dachkanal
- 3: Abdeckleiste
- 4: Haltemittel
- 5: Dachlastträgeröffnung
- 6: Käfig
- 7: Schieber
- 8: Führung
- 9: Führungsbahn
- 10: Ausnehmung
- 11: Öffnung
- 12: Erhebung
- 13: Federelement
- 14: Nase
- 15: Anschlaghaken
- 16: Führungskanal

## Patentansprüche

1. Dach (1) für ein Kraftfahrzeug mit einem Dachkanal (2), mit einer den Dachkanal (2) abdeckenden Abdeckleiste (3), mit einer wahlweise verschließbaren oder freigebbaren Dachlastträgeröffnung (5) und mit im Bereich der Dachlastträgeröffnung (5) angeordneten Haltemitteln (4) zur Halterung eines Dachlastträgers, wobei
in der Dachlastträgeröffnung (5) ein Käfig (6) und ein Schieber (7) angeordnet sind,
der Käfig (6) im Bereich der Haltemittel (4) für den Dachlastträger angeordnet ist,
der Schieber (7) in dem Käfig (6) längsverschieblich von einer die Dachlastträgeröffnung (5) verschließenden Stellung in eine die Dachlastträgeröffnung (5) freigebende Stellung geführt ist,
der Käfig (6) eine Führungsbahnen (9) aufweisende Führung (8) und einen an die Führungsbahnen fluchtend anschließenden Führungskanal (16) für den Schieber (7) aufweist, der näher am Boden des Dachkanals angeordnet ist als die Führungsbahnen,
der Käfig (6) ein den Schieber (7) in die Öffnung (11) vorspannendes Federelement (13) hat, wobei sich der Schieber (7) zum Freigeben der Dachlastträgeröffnung (5) gegen die Kraft des Federelementes (13) niederdrücken lässt, um anschließend in seine Längsrichtung in den Führungskanal (16) hineingeschoben werden zu können,
der Käfig (6) eine Öffnung (11) hat und der Schieber (7) eine passend in eine Öffnung (11) eindringende Erhebung (12) hat, **dadurch gekennzeichnet,**
**dass** der Schieber (7) elastisch gestaltet ist, dass der Schieber (7) an einem Ende eine hervorstehende Nase (14) und am gegenüberliegenden Ende einen Anschlaghaken (15) hat, dass das Federelement (13) des Käfigs (6) gegen die Nase (14) vorgespannt ist, wenn der Schieber (7) sich in der die Dachlastträgeröffnung (5) verschließenden Stellung befindet und dass der Schieber in der eingeschobenen Stellung, in der die Dachlastträgeröffnung (5) freigeben ist, von dem Anschlaghaken (15) an dem Käfig (6) gehalten ist.

2. Dach (1) für ein Kraftfahrzeug nach Anspruch 1, **dadurch gekennzeichnet, dass** der Käfig (6) und der Schieber (7) eine vormontierbare bauliche Einheit bilden.

3. Dach (1) für ein Kraftfahrzeug nach Anspruch 1 oder 2, **dadurch gekennzeichnet, dass** die Abdeckleiste (3) eine die Dachlastträgeröffnung (5) aufweisende Ausnehmung (10) hat und dass ein an die Ausnehmung (10) angrenzender Rand der Abdeckleiste (3) auf dem Käfig (6) aufliegt.

4. Dach (1) für ein Kraftfahrzeug Anspruch 1, **dadurch gekennzeichnet, dass** der Schieber (7) eine um die Erhebung (12) umlaufende Anlagekante hat.

5. Dach (1) für ein Kraftfahrzeug nach zumindest einem der vorhergehenden Ansprüche, **dadurch gekennzeichnet, dass** die Führung (8) des Käfigs (6) in Verschiebungsrichtung gesehen jeweils einen seitlichen Rand des Schiebers (7) umgreifende Führungsbahn (9) hat.

6. Dach (1) für ein Kraftfahrzeug nach einem der vorhergehenden Ansprüche, **dadurch gekennzeichnet, dass** der Schieber (7) und der Käfig (6) aus Kunststoff gefertigt sind.

## Claims

1. A roof (1) for a motor vehicle, comprising a roof channel (2), a covering strip (3) covering the roof channel (2), a roof load carrier opening (5) that can be selectively closed or released, and retaining means (4) arranged in the region of the roof load carrier opening (5) for retaining the roof load carrier, wherein
a cage (6) and a slide (7) are arranged in the roof load carrier opening (5),
the cage (6) is arranged in the region of the retaining means (4) for the roof load carrier,
the slide (7) is guided in a longitudinally displaceable manner in the cage (6) from a position closing the roof load carrier opening (5) to a position releasing the roof load carrier opening (5),
the cage comprises a guide (8) having guideways (9) and a guide channel (16) for the slide (7) which is adjacent to the guideways in an aligned manner and which is arranged closer to the base of the roof channel than the guideways, the cage (6) comprises a spring element (13) which pretensions the slide (7) into the opening (11), wherein the slide (7) can be pressed down against the force of the spring element (13) for releasing the roof load carrier opening (5) in order to enable it to be pushed subsequently in its longitudinal direction into the guide channel (16), the cage (6) comprises an opening (11) and the slide (7) comprises an elevation (12) which penetrates an opening (11) in a matching fashion,
**characterized in that**
the slide (7) is formed elastically,
the slide (7) comprises at one end a protruding lug (14) and a retaining hook (15) at the opposite end,
the spring element (13) of the cage (6) is pretensioned against the lug (14) when the slide (7) is in the position closing the roof load carrier opening (5), and the slide, in the inserted position in which the roof load carrier opening (5) is released, is retained by the retaining hook (15) on the cage (6).

2. A roof (1) for a motor vehicle according to claim 1, **characterized in that** the cage (6) and the slide (7) form a premountable modular unit.

3. A roof (1) for a motor vehicle according to claim 1 or 2, **characterized in that** the covering strip (3) comprises a recess (10) having the roof load carrier opening (5), and an edge of the covering strip (3) which is adjacent to the recess (10) rests on the cage (6).

4. A roof (1) for a motor vehicle according to claim 1, **characterized in that** the slide (7) comprises a contact edge extending around the elevation (12).

5. A roof (1) for a motor vehicle according to at least one of the preceding claims, **characterized in that** the guide (8) of the cage (6), as seen in the direction of displacement, respectively comprises a guideway (9) engaging around a lateral edge of the slide (7).

6. A roof (1) for a motor vehicle according to one of the preceding claims, **characterized in that** the slide (7) and the cage (6) are made of plastic.

## Revendications

1. Toit (1) pour un véhicule à moteur avec une gouttière de toit (2), avec une bande de couverture (3) couvrant la gouttière de toit (2), avec une ouverture pour un porte-charges de toit (5) qui peut être fermée ou libérée au choix et avec des moyens de maintien (4) disposés dans la zone de l'ouverture pour un porte-charges de toit (5) afin de retenir un porte-charge de toit, dans lequel
une cage (6) et une coulisse (7) sont disposées dans l'ouverture pour un porte-charges de toit (5) ;
la cage (6) est disposée dans la zone des moyens de maintien (4) pour le porte-charges de toit ;
la coulisse (7) est guidée dans la cage (6) pour coulisser longitudinalement d'une position fermant l'ouverture pour un porte-charge de toit (5) à une position dégageant l'ouverture pour un porte-charges de toit (5) ;
la cage (6) présente un guide (8) présentant une piste de guidage (9) et un canal de guidage (16) pour la coulisse (7) qui se raccorde en alignement aux pistes de guidage et qui est disposé plus près du fond de la gouttière de toit que les pistes de guidage ;
la cage (6) possède un élément de ressort (13) qui précontraint la coulisse (7) dans l'ouverture (11), la coulisse (7) pouvant être enfoncée vers le bas contre la force de l'élément de ressort (13) pour dégager l'ouverture pour un porte-charges de toit (5) et pouvoir ensuite être déplacée dans le canal de guidage (16) dans sa direction longitudinale ;
la cage (6) possède une ouverture (11) et la coulisse (7) une saillie (12) qui s'adapte dans une ouverture (11) ;
caractérisé en en ce que
la coulisse (7) est élastique,
en ce que la coulisse (7) possède à une extrémité un ergot (14) en saillie et à l'autre extrémité un crochet de butée (15),
en ce que l'élément de ressort (13) de la cage (6) est précontraint vers l'ergot (14) quand la coulisse (7) se trouve dans la position qui ferme l'ouverture pour un porte-charges de toit (5) et
en ce que la coulisse est retenue sur la cage (6) par le crochet de butée (15) dans la position insérée dans laquelle l'ouverture pour un porte-charges de toit (5) est dégagée.

2. Toit (1) pour un véhicule à moteur selon la revendication 1, **caractérisé en ce que** la cage (6) et la coulisse (7) forment une unité de construction pouvant être pré-assemblée.

3. Toit (1) pour un véhicule à moteur selon la revendication 1 ou 2, **caractérisé en ce que** la bande de couverture (3) possède un évidement (10) comportant l'ouverture pour un porte-charges de toit (5) et **en ce qu'**un bord de la bande de couverture (3) contigu à l'évidement (10) repose sur la cage (6).

4. Toit (1) pour un véhicule à moteur selon la revendication 1, **caractérisé en ce que** la coulisse (7) possède un bord d'appui qui fait le tour de la saillie (12).

5. Toit (1) pour un véhicule à moteur selon l'une au moins des revendications précédentes, **caractérisé en ce que** le guide (8) de la cage (6) possède, vu dans le sens de déplacement, une piste de guidage (9) entourant chaque bord latéral de la coulisse (7).

6. Toit (1) pour un véhicule à moteur selon l'une au moins des revendications précédentes, **caractérisé en ce que** la coulisse (7) et la cage (6) sont fabriqués en matière plastique.
